# EUROPÄISCHE PATENTSCHRIFT

(11) **EP 3 178 634 B1**
(45) Veröffentlichungstag und Bekanntmachung des Hinweises auf die Patenterteilung: **31.07.2019**
(21) Anmeldenummer: 17153552.9
(22) Anmeldetag: 21.10.2011
(51) Int. Cl.: B29C 63/24, B29C 70/08, B29C 70/86, B62D 29/00, B29K 105/08, B29C 53/58

(54) **VERFAHREN ZUR HERSTELLUNG EINES MATERIALHYBRIDEN BAUTEILS**
METHOD FOR PRODUCING A HYBRID MATERIAL COMPONENT
PROCÉDÉ DE FABRICATION D'UN COMPOSANT EN MATÉRIAU HYBRIDE

(30) Priorität: 15.12.2010 DE 102010063094
(43) Veröffentlichungstag der Anmeldung: 14.06.2017
(62) Teilanmeldung aus: 11186121.7
(73) Patentinhaber: Bayerische Motoren Werke Aktiengesellschaft, 80809 München (DE)
(72) Erfinder: Behrendt, Franz-Peter, 80469 München (DE)

(56) Entgegenhaltungen:
- DE-A1- 10 158 627
- GB-A- 2 222 653
- US-A1- 2009 148 700
- US-A1- 2010 083 815
- JUNG D W ET AL: "Aluminum-GFRP hybrid square tube beam reinforced by a thin composite skin layer", COMPOSITES PART A: APPLIED SCIENCE AND MANUFACTURING, ELSEVIER SCIENCE PUBLISHERS B.V., AMSTERDAM, NL, Bd. 40, Nr. 10, 1. Oktober 2009 (2009-10-01), Seiten 1558-1565, XP026613352, ISSN: 1359-835X, DOI: 10.1016/J.COMPOSITESA.2009.06.015 [gefunden am 2009-07-01]

## Beschreibung

Die Erfindung betrifft ein Verfahren zur Herstellung eines materialhybriden Bauteils mit einem metallischen Hohlprofil und einer daran angeordneten Ummantelung.

Um faserverstärkte Hohlprofile mit geometrischem Hinterschnitt herzustellen, werden im Stand der Technik verlorene Kerne verwendet. Diese werden zumeist als massive Kerne aus Sand oder als hohle Blasformkerne aus thermoplastischem Kunststoff realisiert, auf die faserverstärktes Kunststoffmaterial aufgebracht wird. Im fertigen Bauteil haben die Sand- bzw. Blasformkerne jedoch keine Funktion. Sandkerne müssen aus dem fertigen Bauteil herausgelöst oder gespült werden. Blasformkerne keine bei Hinterschneidungen in der Regel nicht entfernt werden und müssen im Inneren verbleiben. Dies Führt unnötigerweise zu einem erhöhten Gewicht.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, ein Verfahren aufzuzeigen, mit dem besonders formstabile faserverstärkte, hohle Bauteile realisiert werden können, die dabei gleichzeitig ein geringes Gewicht aufweisen.

Diese Aufgabe wird durch ein Verfahren mit den Merkmalen des unabhängigen Anspruchs gelöst. Die abhängigen Ansprüche stellen vorteilhafte Ausführungen der Erfindung dar.

Die GB 2 222 653 A zeigt ein Verfahren zur Herstellung von Verbundrohren mit einem nicht kreisförmigen Querschnitt, beispielsweise einem kastenförmigen Querschnitt, bei dem dünne kreisrunde Kunststoff- oder Metallrohre mit einer ungehärteten glasfaserverstärkten Ummantelung versehen werden, die Querschnittsform in einer Werkzeugkavität umgeformt wird und die Ummantelung vor Ort ausgehärtet wird.

Aus der US 2009/0148700 A1 ist ein RTM-Verfahren bekannt, bei dem Verbundteile hergestellt werden, indem in einem trockenen Preform Verbundbauteile als Prepregs eingebracht werden. Diese Prepregs sind vorimprägniert mit einem ersten Harz und teilweise polymerisiert. Diese Baugruppe wird anschließend in eine Kavität eingelegt und ein zweites Harz injiziert. Das zweite Harz imprägniert die trockenen Fasern. Beide Harze werden simultan polymerisiert.

Weiterhin kann zumindest eine der Endlosfasern als Stehfaser ausgebildet sein und im Wesentlichen in Längsrichtung des metallhybriden Bauteils bzw. des metallischen Hohlprofils angeordnet sein. Dies bietet den Vorteil, dass das sich ergebende Fasergeflecht bzw. die Faserstruktur in einem Prozessschritt auf der äußeren Oberfläche des metallischen Hohlprofils angeordnet werden kann und somit eine besonders hohe Stabilität im späteren Gesamtbauteil erzeugt wird. Beim Umflechten des metallischen Hohlprofils wird eine Mehrzahl einzelner Endlosfasern miteinander zu einem Triaxialgeflecht verflochten, wobei zwischen Stehfasern und Flechtfasern unterschieden werden kann. Die Stehfasern bzw. Stehfäden des Triaxialgeflechts verlaufen zumindest abschnittsweise parallel zur Längsrichtung bzw. Axialrichtung des metallischen Hohlprofils. Die sogenannten Flechtfasern bzw. Flechtfäden des Triaxialgeflechts schließen einen Winkel im Bereich von 15° bis 85°, bevorzugt im Bereich von 25°-80° zur Längsrichtung des Profilverlaufs ein. Die angegebenen Wertebereiche umfassen dabei auch die Randwerte.

Die Endlosfasern liegen als Prepregs vor und das metallische Hohlprofil wird zumindest mit dem Abschnitt, in dem die Endlosfasern angeordnet sind in ein Autoklav eingebracht und anschließend mit Druck und/oder Temperatur beaufschlagt, wobei ein an den Endlosfasern befindliches Harz aushärtet. Im Sinne der Erfindung sind Prepregs Endlosfasern, die vor dem Umflechten in Harz getränkt bzw. damit vorimprägniert werden, wobei die Kunststoffmatrix bzw. das Harz zähflüssig die Faser benetzt. Derartige Prepregs sind auch als sogenannte nasse Fasern bekannt. Das Press-Werkzeug kann insbesondere ein schlauchförmiger, evakuierbarer Behälter sein, der mit Druck und/oder Temperatur beaufschlagbar ist, um das an den Fasern befindliche Harz zu einer stoffschlüssigen Matrix auszuhärten.

Weiterhin kann das mit Kunststoffmatrix versehene metallische Hohlprofil aus dem Press-Werkzeug entformt werden und an den Randbereichen des Bauteils und/oder der Ummantelung beschnitten werden.

Während des Aushärtens der Kunststoffmatrix in einem inneren Hohlraum des metallischen Hohlprofils wird ein Innendruck erzeugt, der einem äußeren Press-Druck entgegenwirkt.

Weiterhin kann im inneren Hohlraum ein Fluid, insbesondere im flüssigen oder gasförmigen Zustand, eingebracht und mit dem Innendruck beaufschlagt werden. Durch Vorsehen einer Flüssigkeit im Inneren des Hohlraums, die physikalisch bedingt inkompressibel ist, kann im Fall einer Fehlfunktion die explosionsartige Ausbreitung des druckbeaufschlagten Fluids verhindert werden und dadurch die Arbeitssicherheit erhöht werden.

Es eignet sich als Harz bzw. als Material für die Kunststoffmatrix insbesondere Duroplaste, beispielsweise Epoxidharze, und/oder Thermoplaste.

Weiterhin kann das metallhybride Bauteil ein crashbeanspruchtes Strukturbauteil, insbesondere für Kraftfahrzeuge sein. Im Sinne der Erfindung sind A-, B-, C-Säulen, Seitenschweller und/oder Seitenrahmen von Kraftfahrzeugen bzw. Karosserien von Kraftfahrzeugen als derartige Strukturbauteile aufzufassen. Durch die Kombination der hohen Duktilität des metallischen Hohlprofils und der hohen Steifigkeit des faserverstärkten Kunststoffes eignen sich diese metallhybriden Bauteile als Strukturbauteile, die im Crashfall lateral mit Seitenkräften beaufschlagt werden. Das duktile, metallische Hohlprofil verhindert eine vollständige Rissbildung durch den Querschnitt der Ummantelung, so dass im Innenraum des Fahrzeugs keine gefährlichen Schnittkanten entstehen.

Im Folgenden sollen die Vorteile der vorliegenden Erfindung kurz zusammengefasst werden. Durch Vorsehen eines metallischen Hohlprofils kann ein besonders formstabiler Kern realisiert werden, der leicht zu umflechten ist und gute Handling-Eigenschaften bei der Überführung aus dem IHU-Werkzeug in das Flechtwerkzeug bzw. aus dem Flechtwerkzeug zum Press-Werkzeug bietet. Dadurch erhöht sich die Prozesssicherheit des gesamten Herstellungsverfahrens. Durch Aufbringen eines Innendrucks während der Erzeugung der Ummantelung im Inneren des metallischen Hohlprofils kann dieser gestützt werden, wobei die Dichtigkeit durch den IHU-Verfahrensschritt vorab gegeben ist. Nicht zuletzt bietet die Erfindung ein Verfahren mit einer geringen Anzahl an Prozessschritten, da beispielsweise das metallische Hohlprofil als Kern im Inneren des fertigen, faserverstärkten Bauteils verbleibt und nicht herausgelöst werden muss. Hieraus ergeben sich auch wesentlich verbesserte mechanische Eigenschaften des Gesamtbauteils in Bezug auf Längs-, Quer- und Schubsteifigkeiten bzw. deren Festigkeiten.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung
- Figur 1a - e: die Verfahrensschritte beim Ablauf des Innenhochdruckumformprozesses;
- Figur 2 a - c: je eine perspektivische Ansicht eines metallhybriden Bauteils hergestellt mit einem Verfahren gemäß der vorliegenden Erfindung und
- Figur 3: schematisch einen Flechtvorgang
- Figur 4: einen Querschnitt durch ein RTM-Werkzeug mit einem darin befindlichen faserverstärkten Bauteil gemäß einem nicht-erfindungsgemäßen Beispiel.

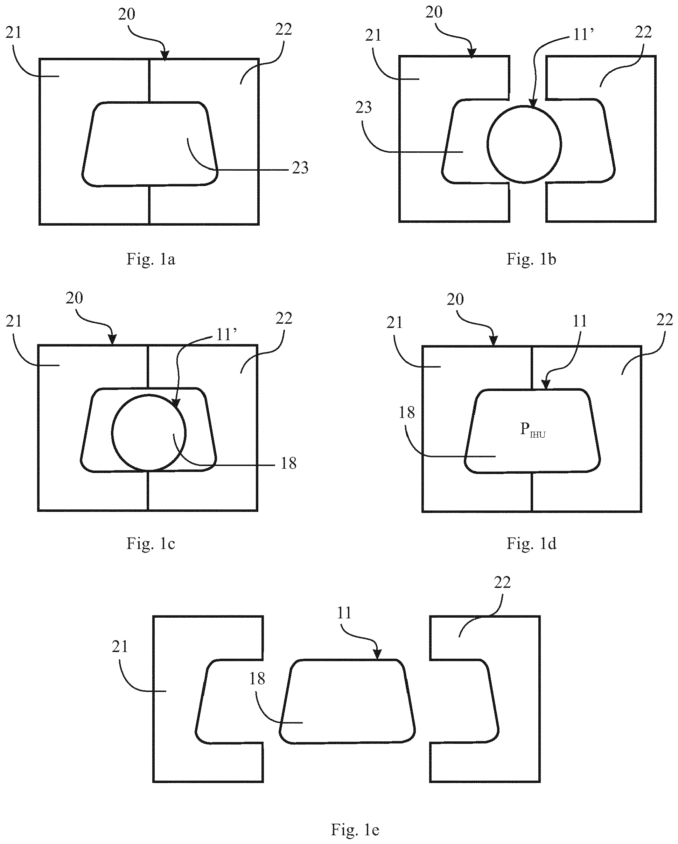

Im Folgenden soll zunächst das Innenhochdruckumformverfahren anhand der Figuren 1a bis e erläutert werden. Ein Innenhochdruckumform(IHU)-Werkzeug 20 umfasst eine erste Werkzeughälfte 21 und eine zweite Werkzeughälfte 22, die zueinander verschiebbar angeordnet sind und im Wesentlichen senkrecht zu einer Trennebene verfahrbar sind. Beispielhaft ist die Trennebene in den Figuren 1a bis 1e vertikal dargestellt, wobei jedoch auch horizontale Trennebenen oder eine Vielzahl von beliebig ausgerichteten Trennebenen denkbar ist. Die erste Werkzeughälfte 21 und die zweite Werkzeughälfte 22 schließen im Inneren eine Kavität 23 ein. In Figur 1b ist das IHU-Werkzeug 20 in einer geöffneten Stellung abgebildet, wobei in dem Bereich, der später die Kavität 23 ausbildet, ein Halbzeug 11' eingebracht wird. Aus dem Halbzeug 11' wird später das metallische Hohlprofil 11 erstellt. Bei diesem Halbzeug 11' kann es sich z.B. um ein Rohr, ein Vierkantprofil oder um ein Profil mit einer beliebigen Querschnittsfläche handeln. Auch konisch zulaufende d.h. sich verjüngende Profile sind denkbar. Bevorzugt soll hier als Material ein Profil aus Aluminium bzw. Stahl verwendet werden.

Nachdem das Halbzeug 11' in das IHU-Werkzeug 20 eingelegt wurde, werden die Werkzeughälften 21, 22 zusammengefahren, so dass sich die Kavität 23 ausbildet, in deren Inneren das Halbzeug 11' liegt, vgl. Fig 1c. Das Halbzeug 11' weist dabei einen inneren Hohlraum 18 auf, der anschließend mit einem Umformdruck P_{IHU} beaufschlagt wird.

Unter diesem Druck verformt sich das Halbzeug 11' und nimmt die Querschnittsform der Kavität 23 an, wie beispielsweise in Figur 1d gezeigt. Dadurch wird das metallische Hohlprofil 11 gebildet.

Abschließend wird das metallische Hohlprofil 11 aus dem IHU-Werkzeug 20 entformt, indem die erste Werkzeughälfte 21 und die zweite Werkzeughälfte 22 auseinandergefahren werden, wie in Figur 1e gezeigt. Das metallische Hohlprofil 11 kann dann aus dem IHU-Werkzeug 20 entnommen werden. Grundsätzlich soll die Erfindung nicht auf die hier dargestellte Querschnittsform, die als Trapez mit abgerundeten Ecken abgebildet ist, beschränkt sein, denn erfindungsgemäß kann jede beliebige Querschnittsform Verwendung finden, somit auch runde, dreieckige, mehreckige oder daraus kombinierte Querschnittsformen.

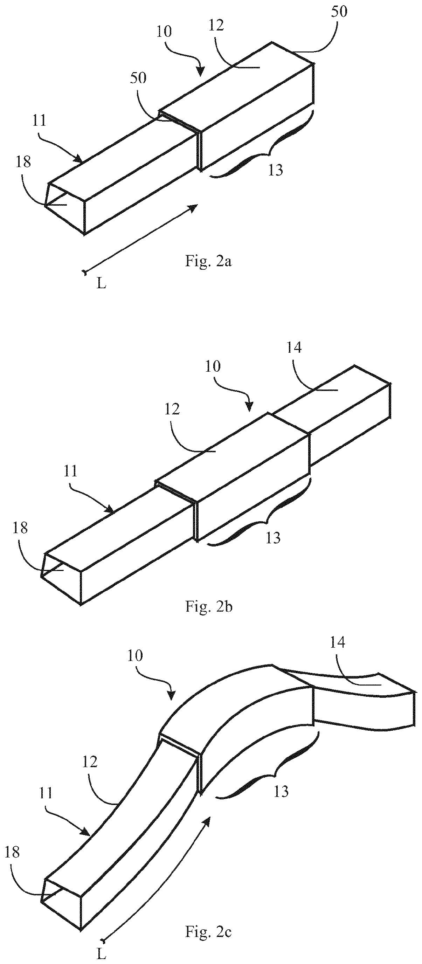

Das metallische Hohlprofil 11 hat nach dessen Herstellung im IHU-Prozess eine vorbestimmte Querschnittsform und einen vorbestimmten Profilverlauf. Wahlweise kann die Querschnittsform entlang des Profilverlaufs auch variieren, so dass sich im Wesentlichen in Längsrichtung L des Profilverlaufs verjüngende Bereiche ergeben. Wie in Figur 2c beispielhaft dargestellt ist, kann der Profilverlauf auch Hinterschneidungen bilden.

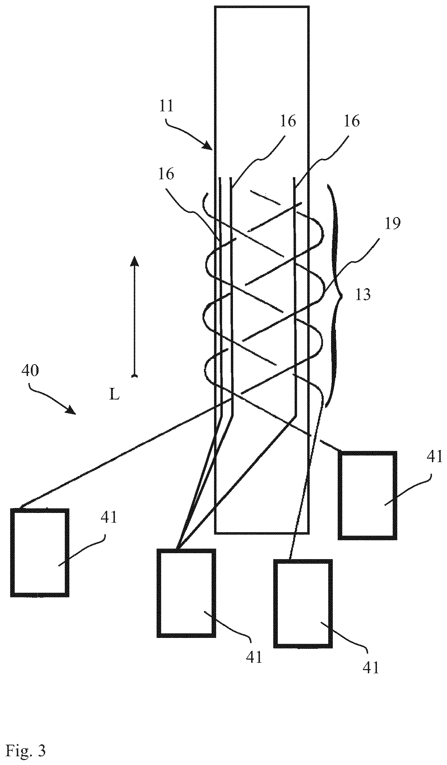

Nachdem das metallische Hohlprofil 11 aus dem IHU-Werkzeug 20 entnommen wurde, werden Fasern 16, 19 in einem vorbestimmten Abschnitt 13 auf eine Oberfläche 14 des metallische Hohlprofils 11 aufgebracht vgl. Figur 2a - c. In einer ersten Alternative des Verfahrens werden hierbei Fasern 16, 19 aufgeflochten, wie beispielweise in Figur 3 dargestellt. Dabei wird das Metallische Hohlprofil 11 durch eine Flechtvorrichtung 40 geführt, wobei es zeitgleich mit Fasern 16, 19 umflochten wird. Dabei ergibt sich ein triaxiales Geflecht aus Stehfasern bzw. Stehfäden 16, die in Längsrichtung L des metallhybriden Bauteils 10 verlaufen und Flechtfasern bzw. Flechtfäden 19, die mit der Längsrichtlung L des Bauteils 10 einen Winkel einschließen. Diese Fasern 16, 19 werden von Faserspeichern 41 abgegeben. Wahlweise können nur vorbestimmte Abschnitte 13 umflochten werden oder die Oberfläche 14 des Metallischen Hohlprofils 11 auch vollständig mit Fasern 16, 19 umflochten werden.

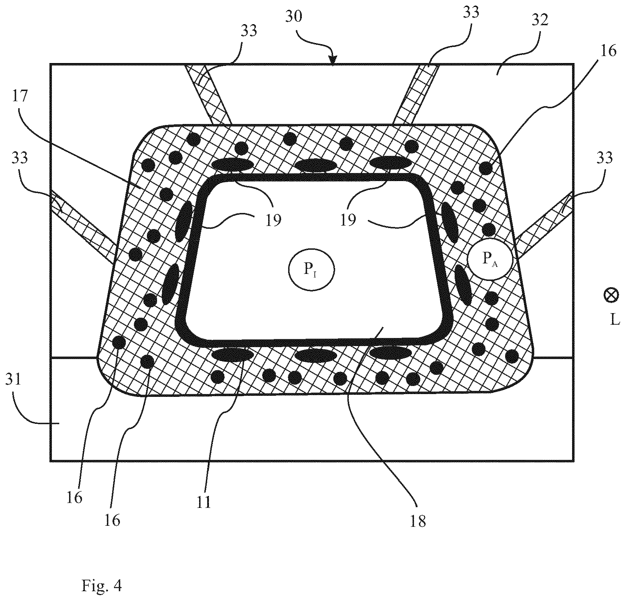

Das mit Fasern 16, 19 versehene metallische Hohlprofil 11 wird anschließend gemäß einem nicht-erfindungsgemäßen Beispiel in ein RTM-Werkzeug eingelegt. Ein solches RTM-Werkzeug 30 ist in Figur 4 dargestellt und umfasst eine untere Werkzeughälfte 31 und eine obere Werkzeughälfte 32, die im Wesentlichen senkrecht zur Trennebene auseinander- und wieder zusammengefahren werden können. Die zwei Werkzeughälften 31, 32 bilden im zusammengefahrenen Zustand eine Kavität aus, in der das metallische Hohlprofil 11 mit daran angeordneten Fasern 16 eingelegt wird. Die obere Werkzeughälfte 32 weist Zufuhrkanäle 33 auf, die als Angüsse fungieren und über die eine Kunststoffmatrix, insbesondere Harz, in die Kavität eingebracht werden kann.

Die Kunststoffmatrix 17 wird dabei insbesondere als Harz unter Druck und Temperatur in die Kavität geleitet und durchdringt den geflochtenen Faserkomplex. In der Darstellung in Figur 4 sind die Stehfäden als kreisrunde Fasern 16 dargestellt, die sich in axialer Richtung L, d.h. im Wesentlichen parallel zum Profilverlauf erstrecken. Die Flechtfasern 19 sind in der Schnittdarstellung elliptisch dargestellt, da ihre eigene Längsachse einen Winkel mit der Längsrichtung L des Profilverlaufs einschließen.

Nachdem die Kunststoffmatrix 17 ausgehärtet ist, kann das fertige Bauteil 10 aus dem RTM-Werkzeug 30 entformt werden. Anschließend werden Randbereiche 50 der Ummantelung 12 endbeschnitten. Wie in Figur 4 dargestellt ist, kann während des RTM-Prozesses ein Innendruck Pₗ im Inneren des Hohlraums 18 des metallischen Hohlprofils 11 aufgebaut werden, der dem Spritzpress-Druck P_{A} entgegenwirkt. Dadurch kann zum einen ein höherer Spritzpress-Druck P_{A} angelegt werden, so dass das Harz 17 besonders gut die Faserschicht mit den Fasern 16 durchdringen kann und zum anderen gewährleistet werden, dass sich keine ungewollten Verformungen am Bauteil ergeben. Der Spritzpress-Druck P_{A} kann dabei in einem Bereich von 1 bis 100 Bar, bevorzugt ca. 80 Bar, betragen.

Im Folgenden soll die Ausführungsform des erfinderischen Verfahrens erläutert werden, die sich von der ersten Ausführungsform dadurch unterscheidet, dass nicht ein RTM-Verfahren verwendet wird, um die Kunststoffmatrix der Ummantelung 12 zu bilden, sondern dass diese in einem Press-Verfahren hergestellt wird. Wie in der ersten Ausführungsform des Verfahrens erfolgt die Herstellung des metallischen Hohlprofils 11 im IHU-Prozess. Anschließend wird in vorbestimmten Bereichen 13 der Oberfläche 14 des metallischen Hohlprofils 11 mindestens ein Prepreg aufgebracht. Bei diesen Prepregs handelt es sich um Fasern, insbesondere Kohle-, Aramid- oder Glasfaser, die dabei vorab mit einer Kunststoffmatrix oder Harz getränkt bzw. vorimpregniert sind. Durch Beaufschlagung mit Druck und/oder Temperatur härtet die Kunststoffmatrix bzw. das Harz aus und bildet so die Ummantelung 12. Hierzu wird das Metallische Hohlprofil 11 mit den angeordneten Prepregs in ein Press-Werkzeug eingelegt. Aufgrund der Anordnung der Prepregs um das metallische Hohlprofil 11 herum eignet, sich hierfür ein elastisches, im Wesentlichen schlauchförmiges Werkzeug, das zumindest über den Bereich, der mit Prepregs umgeben ist, gestülpt wird. Anschließend wird das schlauchförmige Press-Werkzeug geometrisch zusammengezogen. Hierfür kann wahlweise im Inneren des Press-Werkzeugs ein Unterdruck bis hin zu einem Vakuum erzeugt werden und/oder an der Außenseite des Press-Werkzeugs ein Überdruck angelegt werden. Durch den Druck und die zusätzliche Beaufschlagung mit Temperatur wird das Harz der einzelnen Prepregs miteinander aufgeschmolzen, miteinander stoffschlüssig verbunden und ausgehärtet. Abschließend kann dann das fertige Bauteil, das ein metallisches Hohlprofil 11 und eine Ummantelung 12 umfasst, aus dem Press-Werkzeug entformt werden. Erfindungsgemäß findet ein Autoklav Verwendung, um die Ummantelung 12 aus Prepregs herzustellen.

In der Ausführungsform der Erfindung wird das metallische Hohlprofil 11, wenn es in das Press-Werkzeug eingebracht wird, derart gegenüber dem Werkzeug abgedichtet, dass eine Dichtheit entsteht, die verhindert, dass Harz zwischen dem jeweiligen Werkzeug und dem metallischen Hohlprofil 11 herausquellen kann. Im Gegensatz dazu müssen in der zweiten Ausführungsform der Erfindung Öffnungen in dem Press-Werkzeug vorgesehen sein, die ein definiertes abfließen des Harzes zulassen, wenn die Prepregs mit Druck beaufschlagt werden. Ferner wird der innere Hohlraum 18 des Metallisches Hohlprofils 11 mit einem Innendruck Pₗ beaufschlagt. Dieser Innendruck kann in einem Bereich von 1300 bis 2800 bar liegen, wobei die Randbereiche mit umfasst sein sollen.

## Patentansprüche

1. Verfahren zur Herstellung eines materialhybriden Bauteils (10) mit einem metallischen Hohlprofil (11) und einer daran angeordneten Ummantelung (12), mit den Schritten:
- Erzeugen des metallischen Hohlprofils (11) mit einer vorbestimmten Querschnittsform und einem vorbestimmten Profilverlauf, wobei das metallische Hohlprofil (11) mittels eines Innenhochdruckumformverfahrens erzeugt wird
- Erzeugen einer Ummantelung (12) zumindest auf einem Abschnitt (13) einer äußeren Oberfläche (14) des metallischen Hohlprofils (11), wobei die Ummantelung (12) aus einem mit Endlosfasern (16, 19) verstärkten Kunststoff gebildet wird, wobei die Endlosfasern (16, 19) insbesondere Kohle-, Aramid- und/oder Glasfasern sind und nach dem Erzeugen des metallischen Hohlprofils (11) zumindest auf einen vorbestimmten Abschnitt (13) der äußeren Oberfläche (14) des metallischen Hohlprofils (11) die Endlosfasern (16, 19) aufgebracht werden,
**dadurch gekennzeichnet, dass**
- die Endlosfasern (16, 19) auf den vorbestimmten Abschnitt (13) des metallischen Hohlprofils (11) aufgebracht werden, indem dieser mit den Endlosfasern (16, 19) umflochten wird, wobei
- die Endlosfasern (16, 19) als Prepregs vorliegen und
- das metallische Hohlprofil (11) zumindest in dem Abschnitt (13), in dem die Endlosfasern (16) angeordnet sind in ein Autoklav eingebracht wird und anschließend mit Druck beaufschlagt wird, wobei ein an den Endlosfasern (16, 19) befindliches Harz aushärtet,
und dass zumindest während des Aushärtens der Kunststoffmatrix (17) in einem inneren Hohlraum (18) des metallischen Hohlprofils (11) ein Innendruck (Pₗ) erzeugt wird, der einem äußeren Press-Druck (P_{A}) entgegenwirkt.

2. Verfahren nach Anspruch 1, **dadurch gekennzeichnet, dass**
- zumindest eine der Endlosfasern (16, 19) als Stehfaser (16) ausgebildet ist und im Wesentlichen in Längsrichtung (L) des metallhybriden Bauteils (10) angeordnet ist.

3. Verfahren nach einem der vorgehenden Ansprüche, **dadurch gekennzeichnet, dass**
das metallhybride Bauteil (10) ein crashbeanspruchtes Strukturbauteil, insbesondere für Kraftfahrzeuge ist.

4. Verfahren nach Anspruch 1, **dadurch gekennzeichnet, dass** im inneren Hohlraum (18) ein Fluid, insbesondere im flüssigen oder gasförmigen Zustand eingebracht und mit dem Innendruck (Pₗ) beaufschlagt wird.

## Claims

1. A method for producing a hybrid material component (10) with a metallic hollow section (11) and sheathing (12) arranged thereon, having the steps:
- producing the metallic hollow section (11) with a predetermined cross-sectional shape and a predetermined section course, wherein the metallic hollow section (11) is produced by means of a hydroforming process,
- producing sheathing (12) at least on a portion (13) of an outer surface (14) of the metallic hollow section (11), wherein the sheathing (12) is formed from a plastics material reinforced with continuous filaments (16, 19), wherein the continuous filaments (16, 19) are especially carbon, aramid and/or glass fibres and after the production of the metallic hollow section (11) the continuous filaments (16, 19) are applied at least to a predetermined portion (13) of the outer surface (14) of the metallic hollow section (11),
**characterised in that**
- the continuous filaments (16, 19) are applied to the predetermined portion (13) of the metallic hollow section (11) **in that** it is braided with the continuous filaments (16, 19), with
- the continuous filaments (16, 19) being present as prepregs and
- the metallic hollow section (11), at least **in that** portion (13) in which the continuous filaments (16) are arranged, being introduced into an autoclave and then being pressurised, with a resin located on the continuous filaments (16, 19) curing,
and **in that** at least during the curing of the plastics material matrix (17) an internal pressure (Pₗ) which counteracts an external pressing pressure (P_{A}) is generated in an inner cavity (18) of the metallic hollow profile (11).

2. A method according to Claim 1, **characterised in that**
- at least one of the continuous filaments (16, 19) is designed as a warp fibre (16) and is arranged substantially in the longitudinal direction (L) of the hybrid metal component (10).

3. A method according to one of the preceding claims, **characterised in that** the hybrid metal component (10) is a crash-stressed structural component, especially for motor vehicles.

4. A method according to Claim 1, **characterised in that**
a fluid, especially in the liquid or gaseous state, is introduced in the inner cavity (18) and is pressurised with the internal pressure (Pₗ).

## Revendications

1. Procédé de fabrication d'un composant (10) en un matériau hybride comportant un profilé creux (11) métallique avec une enveloppe (12) sur celui-ci, selon les étapes suivantes consistant à :
- réaliser le profilé creux métallique (11) ayant une section prédéfinie et un tracé prédéfini de profilé, le profilé creux métallique (11) étant réalisé selon un procédé de mise en forme à haute pression intérieure,
- réaliser une enveloppe (12) au moins sur un segment (13) de la surface extérieure (14) du profilé creux (11) métallique, l'enveloppe (12) étant en une matière plastique renforcée par des fibres continues (16, 19), les fibres continues (16, 19) étant notamment des fibres de carbone, d'aramide et/ou de verre et après avoir réalisé le profilé creux métallique (11), on applique les fibres continues (16, 19) sur au moins un segment prédéfini (13) de la surface extérieure (14) du profilé creux métallique (11),
**caractérisé en ce que**
- on applique les fibres continues (16, 19) sur le segment prédéfini (13) du profilé creux métallique (11) en l'entourant par un tressage des fibres continues (16, 19),
- les fibres continues (16, 19) étant préimprégnées, et
- on place le profilé métallique creux (11) au moins pour son segment (13) garni des fibres continues (16), dans un autoclave et ensuite on le met en pression, la résine sur les fibres sans fin (16, 19) durcissant et au moins pendant le durcissement de la matrice de matière plastique (17) on génère une pression intérieure (P_{I}) dans la cavité (18) du profilé métallique creux (11), cette pression s'opposant à la pression extérieure (P_{A}).

2. Procédé selon la revendication 1,
**caractérisé en ce qu'**
au moins l'une des fibres sans fin (16, 19) est une fibre droite (16) pratiquement disposée dans la direction longitudinale (L) du composant métallique hybride (10).

3. Procédé selon l'une des revendications précédentes,
**caractérisé en ce que**
le composant métallique hybride (10) est un composant de structure, sollicité par une collision, notamment pour un véhicule automobile.

4. Procédé selon la revendication 1,
**caractérisé en ce qu'**
on applique dans la cavité (18) un fluide, notamment à l'état de liquide ou de gaz et on le met à la pression intérieure (P_{I}).
